# EUROPEAN PATENT SPECIFICATION

(11) **EP 2 265 450 B1**
(45) Date of publication and mention of the grant of the patent: **28.09.2011**
(21) Application number: 08763806.0
(22) Date of filing: 15.04.2008
(51) Int. Cl.: B60C 11/04

(54) **HEAVY- LOAD VEHICLE TIRE**
SCHWERLASTFAHRZEUGREIFEN
PNEUMATIQUE DE VÉHICULE POUR FORTES CHARGES

(43) Date of publication of application: 29.12.2010
(73) Proprietor: Pirelli Tyre S.P.A., 20126 Milan (IT)
(72) Inventor: CAMPANA, Luigi, I-20126 Milano (IT); RAIA, Ciro, I-20126 Milano (IT)
(74) Representative: Lasca, Sergio
(86) International application number: PCT/IT2008/000251
(87) International publication number: WO 2009/128098

(56) References cited:
- JP-A- 62 194 908
- JP-A- 2002 002 232
- US-A- 5 115 850
- US-A- 5 417 269
- US-A- 6 000 451
- US-A1- 2005 230 020

## Description

The present invention relates to a tyre for vehicle wheels, in particular for heavy-load vehicle wheels.

The invention also relates to a tread band for such a tyre, in particular to a pre-moulded tread band for retreading of worn tyres.

A tyre for vehicle wheels intended for use on heavy-load vehicles, generally comprises a carcass structure including at least one carcass ply made up of reinforcing cords embedded into an elastomeric matrix. The carcass ply has end flaps respectively in engagement with annular anchoring structures. The latter are located at the tyre regions usually identified with the name of "beads" and are each usually formed of a substantially circumferential annular insert onto which at least one filling insert is applied, at a radially external position. These annular anchoring structures are commonly identified as "bead cores" and have the function of maintaining the tyre well fastened to the anchoring seat suitably provided in the wheel rim, thus preventing the radially internal end flap of the tyre from coming out of said seat, during use.

Specific reinforcing structures designed to improve torque transmission to the tyre can be provided at the beads.

Associated with the carcass ply at a radially external position is a belt structure comprising one or more belt layers, located in radially superposed relationship with each other and having textile or metallic reinforcing cords with a crossed orientation and/or substantially parallel to the circumferential extension direction of the tyre.

A tread band, also made of elastomeric material, is applied to the belt structure, at a radially external position.

Respective sidewalls of elastomeric material are also applied to the side surfaces of the carcass structure, each extending from one of the side edges of the tread band to close to the respective annular anchoring structure to the beads.

Particularly required from tyres designed for use on heavy-load vehicles are optimal features, in terms of traction ability, pickup ability, steering properties and handling capability, also on snow-covered or slippery road surfaces.

Another feature typically required from tyres is a reduced and/or as much as possible even wear, so as to increase the tyre performance in terms of kilometres that can be run (long life), noise and vibration reduction on running.

The performance of a tyre on running greatly depends on the tread pattern of same.

Typically, the tread band of a tyre comprises an annular centre portion straddling the equatorial plane of the tyre and two annular shoulder portions disposed on axially opposite sides relative to said annular centre portion and separated from the latter by respective circumferential grooves.

The tread band further comprises a plurality of grooves and sipes disposed transversely and circumferentially so as to define a tread pattern.

In the progress of the present specification and in the following claims, the terms "grooves" and "sipes" mean recesses and slits formed in the tread band of the tyre, the transverse and circumferential sipes having a width in a circumferential and transverse direction respectively, smaller than the width in a circumferential and transverse direction of the transverse and circumferential grooves.

In the progress of the present specification and in the following claims, in addition, the terms "axial" and "axially" are used to denote a direction substantially orthogonal to the equatorial plane of the tyre, i.e. a direction substantially parallel to the rotation axis of the tyre. Terms "radial" and "radially" are on the contrary used to denote a direction substantially orthogonal to the rotation axis of the tyre and belonging to a plane passing through this rotation axis, while terms "circumferential" and "circumferentially" are used to denote a direction substantially parallel to the equatorial plane of the tyre along the annular extension thereof.

In the progress of the present specification and in the following claims, in addition, the expression "footprint area of the tyre" means the portion of the peripheral surface of the tread band in contact with the road surface.

In the tread band, the transverse sipes offer assistance in terms of traction and pickup ability, by virtue of the grip front defined on the tread band exactly by these sipes. These sipes in addition help in removing water, in case of a wet road surface.

In the case of a snow-covered road surface, the transverse sipes among other things ensure entrapping of snow in the footprint area of the tyre, thus obtaining a contact between tyre and road surface of the snow-to-snow type on running, this type of contact being desirable as it gives the tyre more traction ability.

On the contrary, the circumferential grooves, of bigger sizes, improve behaviour of the tyre in terms of steering property and resistance to lateral thrusts, the transverse grooves improving behaviour of the tyre in terms of traction and pickup ability.. The circumferential and transverse grooves in addition have an influence on water elimination in the footprint area of the tyre during running on a wet road surface, thus reducing the aquaplane phenomena.

During tyre rolling, the side walls of the grooves and sipes are submitted to high deformations leading their walls to cyclically move close to and away from each other.

This moving close to and away from each other involves generation of particularly dangerous stresses and concentration of tensions at the groove bottom.

This concentration of stresses and tensions is more apparent in the axially outermost grooves.

US 7,273,081 discloses a tyre for heavy-load vehicles in which a tread portion has a ribbed tread pattern formed of ribs separated by continuous main grooves in the circumferential direction of the tyre. At least one of the grooves among those that are positioned in the axially outermost direction is provided with a groove bottom having a continuous projection in a circumferential direction. The ribs adjacent to the inner side of this main groove, on the contrary, are provided with thin sipes disposed at a constant distance from each other.

It is also known to provide the groove bottom with additional ribs having a gravel-guard function.

For instance, US 5,417,269 discloses a tyre for heavy-load vehicles comprising first inclined ridges at the inclined sections of a main groove extending in a zigzag configuration in the circumferential direction of the tyre, a second ridge linearly extending between one of the first ridges and another one of the first ridges, and a third ridge extending between one of the first ridges and the second ridge. The first, second and third ridges are disposed at the main groove, half a pitch inside it. The length of the first ridge in the circumferential direction of the tyre, the length of the second ridge in the circumferential direction of the tyre, the length from one end of one of the first ridges to one end of another one of the first ridges are all different from each other. The first ridges are wider than the second ridges.

US5115850A discloses an improved tire tread having a net-to-gross ratio greater than 50% and a plurality of grooves defined by a base spaced between road contacting ribs is described herein. At least one circumferentially extending radially deep groove has a circumferentially continuous projection in the base of the groove, according to the preamble of claim 1.

US5417269A discloses a pneumatic tire for heavy vehicle comprises first platforms bent at bent sections of a main groove extending zigzag in a circumferential direction of the tire, a second platform linearly extending between one of the first platforms and another of the first platforms, and a third platform extending between the one of the first platforms and the second platform.

US2005/230020A1 discloses a heavy load pneumatic tire in which a tread portion has a rib pattern formed with ribs divided by main grooves which are continuous in a circumferential direction of the tire, at least one of the main grooves that is located on the outermost side in a widthwise direction of the tire is provided at its groove bottom with a projecting stripe which is continuous in the circumferential direction of the tire, and the ribs adjacent to an inner side of the main groove are provided with closed sipeings arranged at substantially constant distances from each other.

JP62194908A discloses a heavy duty tire for busses or the like, with a plurality of main grooves formed in the tread section so that the narrow width of the grooves gradually decreases in the depthwise direction, and a platform formed on the bottom of each main groove.

The Applicant has noticed that generation of cyclically repeated tension and stresses due to the tread entering and exiting the footprint area, can cause arising of cracks and torn portions on the groove bottom, as well as localised temperature increases and phenomena of fatigue of the blend.

These torn portions on the groove bottom can spread and reach the underlying belt structure that becomes uncovered giving rise to oxidation phenomena that are very dangerous because they lead to breaking of the steel cords constituting the belt structure.

On the contrary, localised temperature increases are to be avoided because they involve decay of the features of the blend present at the groove bottom, thus increasing the likelihood that cracks or tearing may start in these regions.

The Applicant has further observed that the axially outermost circumferential grooves are submitted to further stresses in the axial direction leading the grooves to bend moving the walls thereof close to and away from each other when the vehicle goes up and down the pavement for particular manoeuvres.

The Applicant, in order to solve the above discussed problems, has conceived a tread pattern comprising an element capable of stiffening the tread band, and in particular the shoulder portions, so as to inhibit or at all events limit cyclic opening and closing of the walls of the grooves placed in that regions. In this manner, formation of tearing on the groove bottom is reduced and the useful life of the tyre is increased.

In particular, the Applicant has found that it is possible to obtain a tyre having optimal features both in terms of traction and pickup ability and resistance to lateral thrusts, and in terms of useful life and wear, by use of a tread pattern provided with at least one side groove comprising a rib positioned inside it which extends in a circumferential direction and comprises a plurality of portions of increased cross-section in the axial direction and a plurality of joining portions interposed between two circumferentially consecutive portions of increased cross-section, and are connected to the portions of increased cross-section so that the axial size of the cross-section of the rib between portions of increased cross-section in the axial direction and joining portions increases in a gradual manner.

Accordingly, the present invention relates to a tyre for vehicle wheels having a tread band comprising an annular centre portion straddling an equatorial plane and two annular shoulder portions disposed on axially opposite sides relative to the annular centre portion, the annular centre portion being separated from each annular shoulder portion by a respective circumferential side groove, wherein at least one of the side grooves comprises a rib positioned inside it, which extends in a circumferential direction and comprises a plurality of portions of increased cross-section in the axial direction and a plurality of joining portions interposed between the circumferentially consecutive increased-section portions and connected to the increased-cross-section portions in such a manner that the axial size of the cross-section of the rib between portions of increased cross-section in the axial direction and joining portions increases on the whole in a gradual manner.

In the progress of the present specification and in the following claims, the expression "increases on the whole in a gradual manner" is intended to denote such a condition that the axial size of the cross-section between the joining portions and the portions of increased cross-section increases in such a manner as to avoid formation of steps or sharp edges in the circumferential rib.

In the progress of the present specification and in the following claims, "overall" increase comprises both the condition in which the axial size of the cross-section of the rib increases in a continuously growing manner and the condition in which the axial size of the cross-section increases on an average from a minimum axial size at the joining portions to a maximum axial size at the portions of increased cross-section.

In addition, it will be appreciated that the particular conformation of the rib of the circumferential side groove of the tyre of the present invention enables the lateral stresses to which the side walls of the groove are submitted to be reduced when the tyre enters and exits the footprint area, so that these stresses are prevented from reaching the groove bottom.

The tyre of the present invention is particularly suitable for steering wheels of heavy-load vehicles, but can be conveniently used also on the driving wheels of these vehicles.

In another aspect, the present invention relates to a tread band for a tyre for vehicle wheels comprising an annular centre portion straddling an equatorial plane and two annular shoulder portions disposed on axially opposite sides relative to the annular centre portion, the annular centre portion being separated from each annular shoulder portion by a respective circumferential side groove, wherein at least one of the side grooves comprises a rib positioned inside it, which extends in a circumferential direction and comprises a plurality of portions of increased cross-section in the axial direction and a plurality of joining portions interposed between the circumferentially consecutive increased-section portions and connected to the increased-cross-section portions in such a manner that the axial direction of the cross-section of the rib between portions of increased cross-section in the axial direction and joining portions increases in a gradual manner.

Advantageously, such a tread band can be used as the pre-moulded tread band for retreading of tyres for heavy-load vehicles.

The particular shape of the circumferential rib inserted in the groove stiffens the tread band, in particular at the portions of increased cross-section in the axial direction, without limiting the draining efficiency of the groove.

The present invention, in at least one of the above aspects, can have at least one of the following preferred features.

In some embodiments of the present invention, the side grooves have a width L in the axial direction and the portions of increased section can have a size in the axial direction at least greater by 40% than the width L of the side groove.

In preferred embodiments of the present invention the portions of increased cross-section in the axial direction can come into contact with the side walls of the groove.

Preferably, the portions of increased cross-section contact the side walls of the groove in such a manner as to avoid formation of sharp edges.

In preferred embodiments of the present invention the joining portions can comprise intermediate portions.

Advantageously, the rib can comprise a section increase in the radial direction, at the portions of increased cross-section in the axial direction.

Preferably, the portions of increased cross-section can have a hemispherical shape.

This shape makes sure that no sharp edges are present, so that there is a better distribution of the stresses at the groove bottom and the risk that some entrapped objects (typically gravel or stones) may damage the groove is reduced.

Advantageously, each portion of increased section of hemispherical shape can have a radius greater than 1 mm.

In preferred embodiments, at least one portion of increased section by pitch of tread pattern may be present.

Preferably, three portions of increased section by pitch of tread pattern are present at most.

A greater number of portions of increased cross-section by pitch could create sharp edges or portions similar to sharp edges and therefore give rise to undesirable tension, at some lengths of the tread.

In some preferred embodiments, the intermediate portions have a substantially constant cross-section, are substantially rectilinear and have an extension substantially parallel to the equatorial plane.

In some preferred embodiments, said side grooves can have a height H included between 9 and 18 mm, inclusive of the extremes.

Preferably, said grooves can have a height H preferably included between 11 and 15 mm, inclusive of the extremes.

The portions of increased cross-section can have a height h greater than or equal to 0.2 H.

The portions of increased cross-section can have a height h smaller than or equal to 0.3 H.

The cross-section of the intermediate portions can have a height h' greater than 0.08 H, preferably height h' being smaller than 0.3 H.

More preferably, the cross-section of the intermediate portions can have a height h' greater than 0.1 H, but at all events smaller than 0.2 H.

In some preferred embodiments, the cross-section of the intermediate portion can have a width w larger than 0.8 h', preferably smaller than 1.2 h'.

In some preferred embodiments, the side grooves comprise a radial axis passing through the tyre centre and the groove bottom and inclined walls relative to the radial axis passing through the groove bottom and the tyre centre.

Preferably, said side walls are inclined by an angle smaller than 15° relative to the radial axis passing through the groove bottom and the tyre centre.

Advantageously, the side grooves can have an extension substantially parallel to the equatorial plane.

In further preferred embodiments, the annular centre portion of the tread band comprises at least three circumferential rows of blocks. The three circumferential rows of blocks are axially separated by two circumferential centre grooves.

The two circumferential side grooves are disposed on axially opposite sides relative to the equatorial plane (Y-Y').

In some embodiments, in each circumferential row of blocks, two consecutive blocks are defined in the circumferential direction by a sipe inclined to the equatorial plane and extending in a broken line. Advantageously said sipes, depending on their arrangement and extension, give traction and pickup ability to the tread pattern.

In further embodiments, each block has a further sipe inclined to the equatorial plane which substantially extends in the circumferential direction and is offset relative to the longitudinal symmetry axis of said block.

Advantageously, one such a circumferential sipe gives stability to the tyre in the running direction.

Preferably, each of the two annular shoulder portions of the tread band comprises shoulder sipes inclined to the mid-line of the axially adjacent side groove.

The shoulder sipes extend in a broken line and are circumferentially positioned substantially in correspondence with the sipes of the axially adjacent block row.

The above described invention can apply to the so-called "motorway" tyres or long distance tyres or to the so-called "regional" tyres.

Further features and advantages of the present invention will become more apparent from the following detailed description of some preferred embodiments of a tyre in accordance with the present invention, taken with reference to the accompanying drawings. In these drawings:
- Fig. 1 is a cross-section view of a first embodiment of a tyre according to the invention, taken along line I-I in Fig. 2;
- Fig. 2 is a plan development of the tread band of the tyre in Fig. 1;
- Fig. 3 is a plan development of an enlarged portion of the tread band of the tyre in Fig. 1;
- Fig. 4 is a sectional view taken along line A-A' of the rib that can be used in the tread band shown in Figs. 2 and 3; and
- Fig. 5 is a sectional view taken along line B-B' of the rib that can be used in the tread band seen in Figs. 2 and 3.

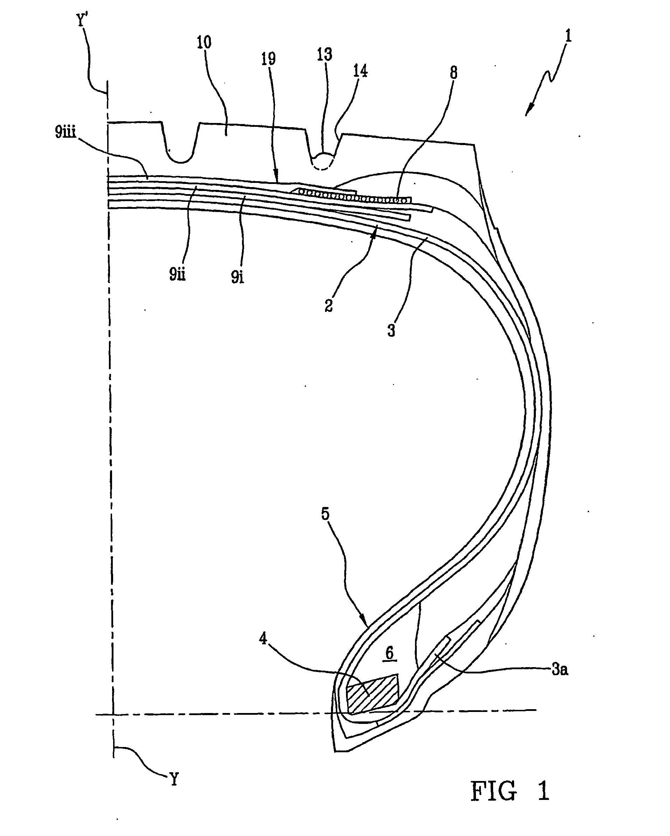

In Fig. 1 a tyre for vehicle wheels according to the present invention, in particular a tyre to be mounted on the wheels of a heavy-load vehicle has been generally identified with reference numeral 1.

In the progress of the present specification and in the following claims, the expression "heavy-load vehicle" should be understood as referring to a vehicle belonging to the categories M2-M3, N2-N3 and 02-04 defined in "Consolidate Resolution of the Construction of Vehicles (R.E.3) (1997)", Annex 7, pages 52-59, "Classification and Definition of Power-Driven Vehicles and Trailers", such as lorries, trucks, tractors, buses, vans and other vehicles of this type.

Tyre 1 comprises a carcass structure 2, including at least one carcass ply 3 formed of reinforcing cords embedded into an elastomeric matrix.

The carcass ply 3 has opposite end flaps 3a in engagement with respective bead cores 4. The latter are located at the tyre regions 5 usually identified with the name of "beads".

An elastomeric filler is applied to the outer perimetral edge of the bead cores 4 and it takes up the space defined between the carcass ply 3 and the respective end flap 3a of said carcass ply 3. Bead cores 4 keep tyre 1 well fastened to the anchoring seat suitably provided in the wheel rim, thus preventing the bead 5 from going out of this seat, in use.

Specific reinforcing structures (not shown) can be provided at beads 5 which have the function of improving torque transmission to tyre 1.

Associated with the carcass ply 3, at a radially external position, is a belt structure 9 preferably comprising several belt layers (in the specific embodiment three layers 9i, 9ii, 9iii are shown) located in radially superposed relationship with each other and having textile or metallic reinforcing cords with a mutually crossed orientation and/or substantially parallel to the circumferential extension direction of tyre 1.

Preferably, said cords have a density included between 30 cords/dm and 80 cords /dm, preferably in the range of 40 cords/dm to 65 cords/dm, measured on said belt layers 9i, 9ii, 9iii, in a circumferential direction close to the equatorial plane (Y-Y') of tyre 1.

In addition, the belt structure 9 comprises a lateral reinforcing layer 8 commonly referred to as zero-degree layer, radially superposed on the carcass ply. Said lateral reinforcing layer 8 generally comprises a plurality of reinforcing elements, typically metallic cords having an ultimate elongation value of 3% to 10%, preferably of 3.5% to 7%.

These reinforcing elements are oriented in a substantially circumferential direction; in other words, they form an angle of some degrees (i.e. a value close to 0°, of about 5° for example) relative to the equatorial plane (Y-Y') of the tyre.

Preferably, said reinforcing elements have a density included in the range of 30 cords/dm to 80 cords/dm, preferably in the range of 40 cords/dm to 60 cords /dm, measured on said lateral reinforcing layer 8, in a circumferential direction, at the equatorial plane (Y-Y') of the tyre.

At a radially external position to the belt structure 9 a tread band 10 is applied which is of elastomeric material as well.

In addition, respective sidewalls of elastomeric material are applied onto the side surfaces of the carcass structure 2, each extending from one of the opposite side edges 10a of the tread band 10 to the respective annular anchoring structure 4 to the beads 5.

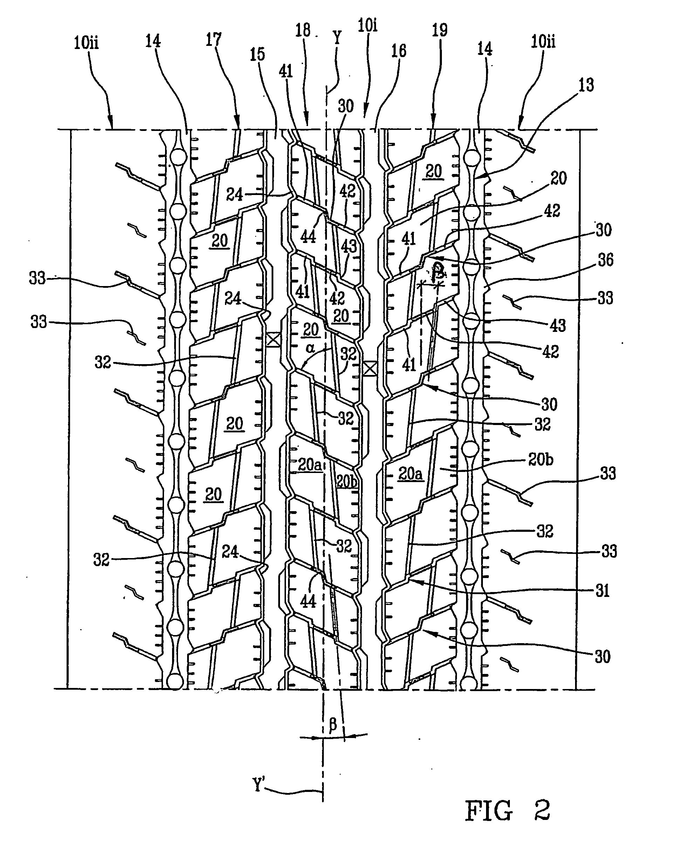

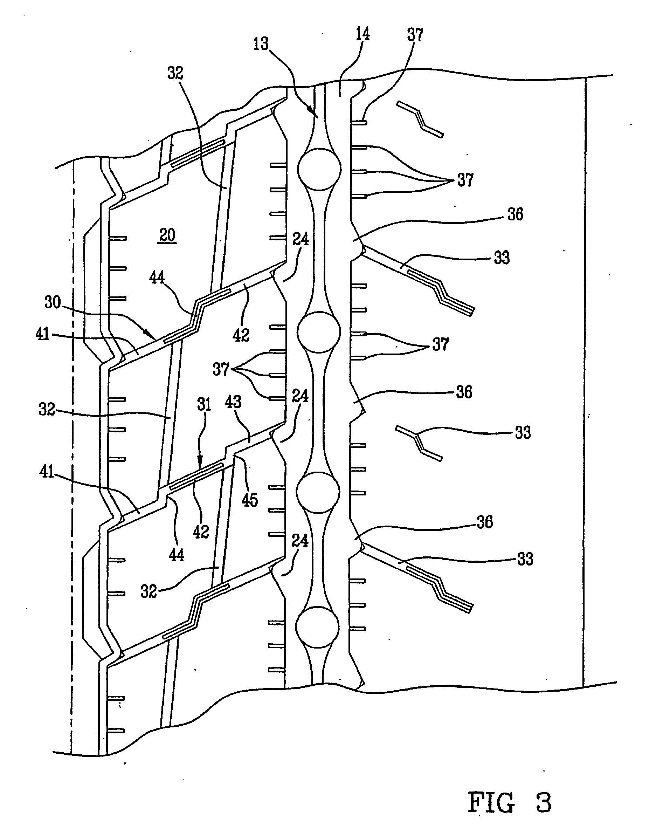

With reference to Figs. 2 and 3, the tread band 10 comprises an annular centre portion 10i disposed astride the equatorial plane Y-Y' of tyre 1 and two opposite annular shoulder portions 10ii disposed on axially opposite sides relative to the annular centre portion 10i.

Each annular shoulder portion 10ii is separated from the annular centre portion 10i of tyre 1 by a respective circumferential side groove 14.

Each circumferential side groove 14 has a height H in the range of 9 mm to 18 mm and an extension substantially parallel to the equatorial plane Y-Y'.

The circumferential side grooves further have a width L, measured in the axial direction, smaller than 20 mm, preferably smaller than 15 mm. Width L measured in the axial direction is larger than 10 mm, preferably larger than 11 mm.

The circumferential side grooves 14 have inclined side walls relative to a radial axis passing through the centre of the tyre and the bottom of the groove itself.

Preferably, the side walls of the circumferential side grooves 14 are inclined by an angle smaller than or equal to 15° relative to the radial axis passing through the groove bottom and the tyre centre.

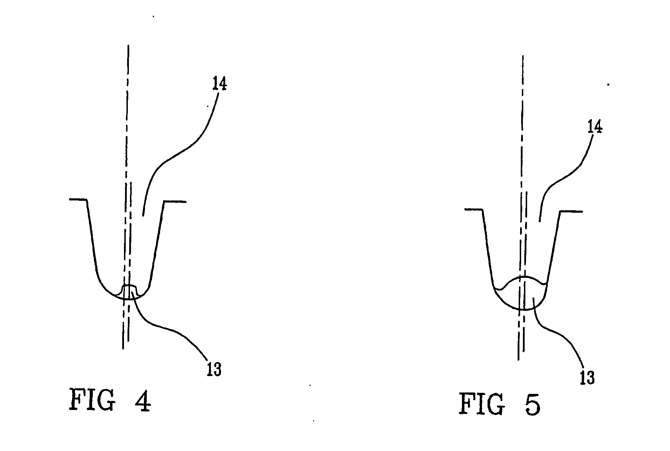

The bottom of the circumferential side grooves 14, as better seen in Figs. 4 and 5, is joined to the side walls with a joining radius r included between 2 and 7 mm.

Instead, the annular centre portion 10i of the tread band comprises two circumferential centre grooves 15, 16 disposed on axially opposite sides of the equatorial plane (Y-Y') to define three circumferential rows 17, 18, 19 of blocks 20.

Referring particular to Figs. 2 and 3, blocks 20 of the annular centre portion 10i are disposed along circumferential rows 17, 18, 19 that are axially separated from the circumferential centre grooves 15, 16 having a substantially circumferential extension, parallel to the equatorial plane (Y-Y').

The tread pattern shown in Fig. 2 is particularly adapted for a so-called motorway or long distance use.

In the specific example shown in Figs. 2 and 3, each row 17, 18, 19 of blocks 20 has a plurality of transverse sipes 30, 31.

Each sipe 30, 31 is such disposed as to define two consecutive blocks 20 in the circumferential direction.

The transverse sipes 30, 31 substantially extend along an inclined direction relative to the equatorial plane (Y-Y') of the tyre.

In particular, the transverse sipes 30, 31 are substantially inclined to the equatorial plane Y-Y' of the tyre so as to form an angle α larger than 60°, preferably smaller than 90°, and for example equal to 70°.

To the aims of the present invention, it is considered the smallest angle formed between the straight line passing through the sipe or the groove in reference and the equatorial plane (Y-Y').

Each sipe 30, 31 further has an extension according to a broken line. In this way, since several grip fronts are offered by each sipe, the traction ability of the tread band 10 in the advancing direction of the tyre is increased.

In particular, each sipe 30, 31 has at least two inclined portions 41, 42, 43 at said angle α with the equatorial plane and at least one connecting portion 44, 45 substantially disposed in a circumferential way.

The connecting portion 44, 45 substantially disposed in a circumferential way is interposed between two inclined portions 41, 42, 43 in succession, in order to perform its connecting function.

In detail, each sipe 30 comprises two inclined portions 41, 42 and a connecting portion 44, while each sipe 31 comprises three inclined portions 41, 42, 43 and two connecting portions 44, 45. Each row of blocks 17, 18, 19 comprises one sipe 30 alternated with one sipe 31 in the circumferential direction.

As shown in Fig. 2, blocks 20 are defined in a circumferential direction by sipes 30, 31 and in an axial direction by two circumferential grooves 14, 15, 16 and substantially are of parallelepiped shape elongated in the axial direction.

To this aim, each sipe 30, 31 extends from a circumferential groove 14, 15, 16 to the axially consecutive one.

Preferably, sipes 30, 31 have a maximum depth included in the range of 2.5 mm to 7 mm, inclusive of the extremes.

Sipes 30, 31 do not show a constant depth over the whole extension thereof, but have a depth increase in the centre.

Each block 20 has a further sipe 32 disposed in a substantially circumferential direction.

Each sipe 32 is disposed slightly inclined to the equatorial plane. In detail, each sipe 32 is such disposed as to form an angle β with the equatorial plane (Y-Y') smaller than 15°, preferably larger than 2°, of about 5° for example.

Each sipe 32 further is offset relative to the vertical mid-line of block 20 so that it divides each block 20 into two asymmetric portions 20a, 20b.

Each sipe 32 appears to be axially opposite to the transverse sipe 32 of the circumferentially consecutive block 20, relative to the straight line passing through the vertical mid-line.

Each sipe 32 extends from a transverse sipe 30 to the circumferentially consecutive sipe 31 or vice versa.

Sipes 32 have a depth included in the range of 0.5 to 3 mm, inclusive of the extremes.

Preferably, sipes 32 have a constant depth over their whole extension.

For the sake of clarity, reference numeral 20 is only associated with some blocks, reference numeral 30, 31, 32 is only associated with some of the transverse or circumferential sipes.

Preferably, blocks 20 of the annular centre portion 10i of the tread band 10 in the example in Fig. 2 have chamfered edges 24 at the transverse sipes 30, 31. Advantageously, in this manner the number of sharp edges that, due to their mobility, can give rise to starting of phenomena of uneven wear and noise is conveniently reduced.

Preferably, the maximum depth of the circumferential centre grooves 15, 16 is included between about 9 mm and about 25 mm.

Preferably, said tyre further comprises, at each of the two annular shoulder portions 10ii, a plurality of transverse side sipes 33 included between the circumferential groove 14 and a respective end portion 10a of the tread band 10.

The axial extension of the side sipes 33 is smaller than that of the transverse sipes 31, 32 of blocks 20.

The side sipes 33 can have an axial extension different from each other, as in the embodiment shown in Figs. 2 and 3. By way of example, as shown in said figures, side sipes 33 of greater extension alternated with side sipes 33 of smaller extension can be provided.

The side sipes 33 can have a varying depth along their extension.

The side sipes 33 have an extension in the form of a broken line and are substantially positioned at the transverse sipes 30, 31 of the axially adjacent block 20 row.

Preferably, the annular shoulder portions 10ii have a plurality of chamfered edges 36 at the intersection point between the side sipes 33 and the grooves.

Blocks 20 and each of the annular shoulder portions 10ii can have further wear-proof sipes 37, at circumferential grooves bounding said portions in the axial direction.

Extension of the wear-proof sipes is about 2, 3 mm. The wear-proof sipes 37 are used to increase the block mobility in the circumferential direction to counteract the uneven-wear phenomenon.

Turning back to the tread pattern see in Fig. 2, it is possible to see that the circumferential side grooves 14 have a rib 13 inside them.

Rib 13 extends in a substantially circumferential direction and has a plurality of portions of increased cross-section 21 in the axial direction and a plurality of joining portions 22.

In the embodiment shown in the figures, the joining portions further comprise intermediate portions 23.

Each joining portion 22 is disposed between two consecutive portions of increased cross-section 21 in the axial direction and is connected to the portions of increased cross-section 21 in such a manner that the axial size of the cross-section of rib 13 between joining portions 22 and portions of increased cross-section 21 in the axial direction increases on the whole in a gradual manner.

The thus shaped rib has a dual function. In fact it both reduces the movements of groove 14, thus giving rise to a reduction in the fatigue phenomena, and hinders propagation of torn portions at the groove bottom.

In particular, while the function of reducing the groove movements particularly relies on the portions of increased cross-section 21, the whole rib 13, due to its extension at the groove bottom, hinders tearing propagation and helps in reallocation of tensions at the groove bottom.

Rib 13 in fact makes the tread band stiff, counteracting opening of the groove itself inside which it is placed.

Referring particularly to Fig. 3 it is possible to see that each intermediate portion 23 is that length of the joining portion 22 that is the farthest from the two portions of increased cross-section 21 between which it is interposed.

The portions of increased cross-section 21 of the same groove 14 all have the same shape and size.

The number of the portions of increased cross-section 21 is at least one by tread pattern pitch, but in any case it is not greater than three by pitch.

A greater number of sections of increased cross-section 21 by pitch could create sharp edges or portions similar to sharp edges and therefore undesirable tensions at some lengths of the tread.

The portions of increased cross-section 21 are preferably positioned circumferentially offset relative to the transverse sipes 30 or 31.

The portions of increased cross-section 21 preferably axially extend in such a manner that they come into contact with the side walls of the groove 14 with which they are integrated (as better shown in Fig. 5).

Due to binding formed between the side walls of the groove 14, axial stiffness of the tread band increases, thereby counteracting opening of the groove.

In particular, the portions of increased cross-section 21 contact the side walls of the side groove 14 and are joined thereto without forming sharp edges.

To increase the movement-reduction effect and the consequent reduction in the fatigue phenomena, rib 13, at portions 21, can also have section increases in other directions, in particular in the radial direction, relative to the joining portions 22.

To this aim, the portions of increased section 21 have a substantially hemispherical shape so that they show section increases substantially in all directions relative to the intermediate portions 23.

Preferably, each section of hemisperical shape 21 has a radius greater than 1 mm, preferably smaller than 6 mm, equal to 1.5 mm for example.

The portions of increased cross-section 21 can further have a height h greater than or equal to 0.2 H.

Preferably, the portions of increased cross section 21 have a height h smaller than or equal to 0.3 H.

The intermediate portions 23 circumferentially extend at the mid-line of the groove and have an extension substantially parallel to the equatorial plane Y-Y'.

In addition, preferably, the intermediate portions 23 have a substantially constant cross-section.

In detail, the cross-section of the intermediate portions has a height h' greater than or equal to 0.08 H, preferably smaller than or equal to 0.3 H. More preferably, said height is greater than or equal to 0.1 H, but at all events smaller than or equal to 0.2 H.

The cross-section of the intermediate portions has a substantially square cross-section; in other words, the width w of this cross-section is substantially equal to the height h' of same.

In detail, the cross-section of the intermediate portions 23 has a width w included in the range between 0.8 h' and 1.2 h'.

The side walls of the intermediate portions 23, as better shown in Fig. 4, are joined at the groove bottom to the side walls of the groove 14 itself, so as to form sharp edges that can generate arising of fatigue phenomena and cracks due to wear.

As previously said, the cross-section of the joining portion 22 of rib 13 increases starting from the intermediate portion so as to reach the sizes of the portion of increased cross-section 21 in a gradual manner, i.e. without formation of steps or sharp edges.

The intermediate portion 23 extends in a circumferential direction over at least 30% of the circumferential extension of a joining portion 22.

The tread pattern shown in Figs. 2 and 3 is only an example of a high number of tread patterns that can be actually made depending on specific requirements. In particular, the number of blocks, transverse sipes, circumferential sipes, transverse grooves (if any), circumferential grooves, block rows, the circumferential position of the blocks in a row relative to that of the blocks in the axially adjacent row and/or the circumferential position of the blocks of the annular centre portion of the tyre relative to that of the blocks of the annular shoulder portions of the tyre can vary depending on the specific use provided for the tyre, thus obtaining a tread pattern different from that shown in Figs. 2 and 3 but still falling within the protection scope defined in the attached claims.

In addition, tread patterns without the centre groove 15 can be provided, as well as thread patterns with blocks, circumferential and transverse grooves (if any), and circumferential sipes of shape and/or sizes different from those described above, with reference to Figs. 2 and 3. Also inclination of the transverse sipes relative to the equatorial plane Y-Y' can be different from that shown in Figs. 2 and 3, while still falling within the protection scope defined in the attached claims.

Furthermore, without departing from the protection scope of the present invention, it will be, by way of example, possible to insert one or more ribs 13 into the circumferential centre grooves 15, 16, in addition to ribs 13 already present in at least one of the axially outermost circumferential grooves 14.

Obviously, a person skilled in the art will be able to carry out further modifications and variations on the above described rib 13 for the purpose of meeting specific and contingent application requirements, which modifications and variations will in any case fall within the protection scope as defined in the following claims.

## Claims

1. A tread band for a tyre for vehicle wheels comprising an annular centre portion (10i) disposed astride an equatorial plane (Y-Y') and two annular shoulder portions (10ii) disposed on axially opposite sides relative to the annular centre portion (10i), the annular centre portion (10i) being separated from each annular shoulder portion (10ii) by a respective circumferential side groove (14), wherein at least one of the circumferential side grooves (14) comprises a rib (13) positioned inside it, which extends in a circumferential direction and comprises a plurality of portions of increased cross-section in the axial direction (21) and a plurality of joining portions (22), interposed between the consecutive increased-cross-section portions (21) and connected to the increased-cross-section portions (21) **characterized in that** the axial size of the cross-section of the rib (13) between portions of increased cross-section in the axial direction (21) and joining portions (22) increases on the whole in a gradual manner to avoid sharp edges in the rib.

2. A tyre for vehicle wheels having a tread band according to claim 1.

3. A tyre as claimed in claim 2, wherein the side grooves (14) have a width L in the axial direction and the portions of increased section have a width in the axial direction larger by at least 40% than the width L of said side groove (14).

4. A tyre as claimed in claim 3, wherein the portions of increased cross-section (21) can come into contact with the side walls of the groove (14).

5. A tyre as claimed in claim 4, wherein the portions of increased cross-section (21) contact the side walls of the groove (14) in such a manner as to avoid formation of sharp edges.

6. A tyre as claimed in anyone of claims from 2 to 5, wherein each joining portion (22) can comprise at least one intermediate portion (23).

7. A tyre as claimed in anyone of claims from 2 to 6, wherein said rib (13) comprises a section increase in the radial direction, at the portions of increased cross-section (21).

8. A tyre as claimed in anyone of claims from 2 to 7, wherein the portions of increased cross-section (21) have a hemispherical shape.

9. A tyre as claimed in anyone of claims from 2 to 8, wherein at least one portion of increased section (21) by pitch of tread pattern is present.

10. A tyre as claimed in anyone of claims from 2 to 9, wherein three portions of increased section (21) by pitch of tread pattern are present at most.

11. A tyre as claimed in anyone of claims from 2 to 10, wherein said intermediate portions (23) have a substantially constant cross-section, are substantially rectilinear and have an extension substantially parallel to the equatorial plane (Y-Y').

12. A tyre as claimed in anyone of claims from 2 to 11, wherein said side grooves (14) comprise a radial axis passing through the groove bottom and the tyre centre.

13. A tyre as claimed in claim 12, wherein said side walls are inclined by an angle smaller than 15° relative to said radial axis passing through the groove bottom and the tyre centre.

14. A tyre as claimed in anyone of claims from 2 to 13, wherein said side grooves (14) have an extension substantially parallel to the equatorial plane (Y-Y').

15. A tyre as claimed in anyone of claims from 2 to 14, wherein said annular centre portion (10i) comprises at least three circumferential rows (17, 18, 19) of blocks (20), said at least three circumferential rows (17, 18, 19) of blocks (20) being axially separated by two circumferential centre grooves (15, 16).

16. A tyre as claimed in claim 15, wherein the two circumferential centre grooves (15, 16) are disposed on axially opposite sides relative to the equatorial plane (Y-Y').

17. A tyre as claimed in anyone of claims from 2 to 16, wherein in each circumferential row (17, 18, 19) of blocks (20), two consecutive blocks (20) are defined in the circumferential direction by a sipe (30, 31) inclined to the equatorial plane (Y-Y') and extending in a broken line.

18. A tyre as claimed in anyone of claims 15 to 17, wherein each block (20) has a further sipe (32) inclined to the equatorial plane which substantially extends in the circumferential direction and is offset relative to the longitudinal symmetry axis of said block.

19. A tyre as claimed in anyone of claims from 2 to 18, wherein each of the two annular shoulder portions (10ii) comprises shoulder sipes (33) inclined to the mid-line of the axially adjacent side groove.

20. A tyre as claimed in claim 19, wherein the shoulder sipes (33) extend in a broken line and are positioned substantially in correspondence with the transverse sipes (30, 31) of the axially adjacent row of blocks (20).

## Patentansprüche

1. Lauffläche für einen Reifen für Fahrzeugräder mit einem ringförmigen Mittelabschnitt (10i), der rittlings zu einer Äquatorebene (Y-Y') vorgesehen ist, und mit zwei ringförmigen Schulterabschnitten (10ii), die an axial gegenüberliegenden Seiten bezüglich des ringförmigen Mittelabschnitts (10i) vorgesehen sind, wobei der ringförmige Mittelabschnitt (10i) von jedem ringförmigen Schulterabschnitt (10ii) durch eine jeweilige Umfangsseitennut (14) getrennt ist, wobei wenigstens eine der Umfangsseitennuten (14) eine in dieser angeordnete Rippe (13) aufweist, die sich in einer Umfangsrichtung erstreckt und mehrere Abschnitte mit in der Axialrichtung vergrößertem Querschnitt (21) und mehrere Verbindungsabschnitte (22) aufweist, die zwischen die aufeinander folgenden Abschnitte (21) mit vergrößertem Querschnitt eingefügt sind und mit den Abschnitten (21) mit vergrößertem Querschnitt verbunden sind, **dadurch gekennzeichnet, dass** die axiale Abmessung des Querschnitts der Rippe (13) zwischen Abschnitten mit in der Axialrichtung vergrößertem Querschnitt (21) und Verbindungsabschnitten (22) insgesamt allmählich ansteigt, um scharfe Kanten auf der Rippe zu vermeiden.

2. Reifen für Fahrzeugräder mit einer Lauffläche nach Anspruch 1.

3. Reifen nach Anspruch 2, bei dem die Seitennuten (14) eine Breite L in der Axialrichtung aufweisen und die Abschnitte mit vergrößertem Durchmesser eine Breite in der Axialrichtung aufweisen, die um wenigstens 40 % größer ist als die Breite L der Seitennut (14).

4. Reifen nach Anspruch 3, bei dem die Abschnitte mit vergrößertem Querschnitt (21) mit den Seitenwänden der Nut (14) in Kontakt treten können.

5. Reifen nach Anspruch 4, bei dem die Abschnitte mit vergrößertem Querschnitt (21) die Seitenwände der Nut (14) so kontaktieren, dass sie die Bildung von scharfen Kanten vermeiden.

6. Reifen nach einem der Ansprüche 2 bis 5, bei dem jeder Verbindungsabschnitt (22) wenigstens einen Zwischenabschnitt (23) aufweisen kann.

7. Reifen nach einem der Ansprüche 2 bis 6, bei dem die Rippe (13) einen Durchmesseranstieg in der radialen Richtung bei den Abschnitten mit vergrößertem Querschnitt (21) aufweist.

8. Reifen nach einem der Ansprüche 2 bis 7, bei dem die Abschnitte mit vergrößertem Querschnitt (21) eine halbkugelförmige Gestalt aufweisen.

9. Reifen nach einem der Ansprüche 2 bis 8, bei dem wenigstens ein Abschnitt mit vergrößertem Durchmesser (21) pro Unterteilung des Laufflächenmusters vorhanden ist.

10. Reifen nach einem der Ansprüche 2 bis 9, bei dem höchstens drei Abschnitte mit vergrößertem Durchmesser (21) pro Unterteilung des Laufflächenmusters vorhanden sind.

11. Reifen nach einem der Ansprüche 2 bis 10, bei dem die Zwischenabschnitte (23) einen im Wesentlichen konstanten Querschnitt aufweisen, sie im Wesentlichen geradlinig sind und sie eine Ausdehnung aufweisen, die im Wesentlichen parallel zu der Äquatorebene (Y-Y') ist.

12. Reifen nach einem der Ansprüche 2 bis 11, bei dem die Seitennuten (14) eine radiale Achse aufweisen, die durch den Nutgrund und die Reifenmitte hindurchgeht.

13. Reifen nach Anspruch 12, bei dem die Seitenwände um einen Winkel kleiner als 15° bezüglich der radialen Achse, die durch den Nutgrund und die Reifenmitte geht, geneigt sind.

14. Reifen nach einem der Ansprüche 2 bis 13, bei dem die Seitennuten (14) eine Ausdehnung haben, die im Wesentlichen parallel zu der Äquatorebene (Y-Y') ist.

15. Reifen nach einem der Ansprüche 2 bis 14, bei dem der ringförmige Mittelabschnitt (10i) wenigstens drei Umfangsreihen (17, 18, 19) an Blocks (20) aufweist, wobei die wenigstens drei Umfangsreihen (17, 18, 19) an Blocks (20) axial durch zwei Umfangsmittelnuten (15, 16) getrennt sind.

16. Reifen nach Anspruch 15, bei dem die zwei Umfangsmittelnuten (15, 16) an axial gegenüberliegenden Seiten bezüglich der Äquatorebene (Y-Y') vorgesehen sind.

17. Reifen nach einem der Ansprüche 2 bis 16, bei dem in jeder Umfangsreihe (17, 18, 19) an Blocks (20) zwei in der Umfangsrichtung aufeinander folgende Blocks (20) durch eine Lamelle (30, 31) definiert sind, die zu der Äquatorebene (Y-Y') geneigt ist und sich linienzugartig erstreckt.

18. Reifen nach einem der Ansprüche 15 bis 17, bei dem jeder Block (20) eine weitere Lamelle (32) aufweist, die in Bezug auf die Äquatorebene geneigt ist, die sich im Wesentlichen in der Umfangsrichtung erstreckt und die bezüglich der Längssymmetrieachse des Blocks versetzt ist.

19. Reifen nach einem der Ansprüche 2 bis 18, bei dem jeder der zwei ringförmigen Schulterabschnitte (10ii) Schulterlamellen (33) aufweist, die in Bezug auf die Mittellinie der axial benachbarten Seitennut geneigt sind.

20. Reifen nach Anspruch 19, bei dem sich die Schulterlamellen (33) linienzugartig erstrecken und im Wesentlichen entsprechend der Querlamellen (30, 31) der axial benachbarten Reihe an Blocks (20) angeordnet sind.

## Revendications

1. Bande de roulement pour un pneu pour roues de véhicule comprenant une partie centrale (10i) annulaire disposée à cheval sur un plan équatorial (Y-Y') et deux parties d'épaulement (10ii) annulaires disposées sur des côtés axialement opposés par rapport à la partie centrale (10i) annulaire, la partie centrale (10i) annulaire étant séparée de chaque partie d'épaulement (10ii) annulaire par une rainure latérale (14) circonférentielle respective, dans laquelle au moins une des rainures latérales (14) circonférentielles comporte une nervure (13) positionnée à l'intérieur, qui s'étend dans une direction circonférentielle et comporte plusieurs parties de section transversale augmentée dans la direction axiale (21) et plusieurs parties de liaison (22), interposées entre les parties de section transversale augmentée (21) consécutives et reliées aux parties de section transversale augmentée (21), **caractérisée en ce que** le dimensionnement axial de la section transversale de la nervure (13) entre les parties de section transversale augmentée dans la direction axiale (21) et les parties de liaison (22) augmente de manière graduelle sur la globalité pour éviter des arêtes vives sur la nervure.

2. Pneu pour roues de véhicule ayant une bande de roulement selon la revendication 1.

3. Pneu selon la revendication 2, dans lequel les rainures latérales (14) ont une largeur L dans la direction axiale et les parties de section augmentée ont une largeur dans la direction axiale plus large d'au moins 40% que la largeur L de ladite rainure latérale (14).

4. Pneu selon la revendication 3, dans lequel les parties de section transversale augmentée (21) peuvent entrer en contact avec les parois latérales de la rainure (14).

5. Pneu selon la revendication 4, dans lequel les parties de section transversale augmentée (21) sont en contact avec les parois latérales de la rainure (14) de manière à éviter la formation d'arêtes vives.

6. Pneu selon l'une quelconque des revendications 2 à 5, dans lequel chaque partie de liaison (22) peut comporter au moins une partie intermédiaire (23).

7. Pneu selon l'une quelconque des revendications 2 à 6, dans lequel ladite nervure (13) comporte une augmentation de section dans la direction radiale, au niveau des parties de section transversale augmentée (21).

8. Pneu selon l'une quelconque des revendications 2 à 7, dans lequel les parties de la section transversale augmentée (21) ont une forme hémisphérique.

9. Pneu selon l'une quelconque des revendications 2 à 8, dans lequel est présente au moins une partie de section augmentée (21) par pas de dessin de la bande de roulement.

10. Pneu selon l'une quelconque des revendications 2 à 9, dans lequel sont présentes au plus trois parties de section augmentée (21) par pas de dessin de la bande de roulement .

11. Pneu selon l'une quelconque des revendications 2 à 10, dans lequel lesdites parties intermédiaires (23) ont une section transversale sensiblement constante, sont sensiblement rectilignes et s'étendent sensiblement parallèlement au plan équatorial (Y-Y').

12. Pneu selon l'une quelconque des revendications 2 à 11, dans lequel lesdites rainures latérales (14) comportent un axe radial passant par le fond de rainure et le centre du pneu.

13. Pneu selon la revendication 12, dans lequel lesdites parois latérales sont inclinées d'un angle inférieur à 15° par rapport au dit axe radial passant par le fond de rainure et le centre du pneu.

14. Pneu selon l'une quelconque des revendications 2 à 13, dans lequel lesdites rainures latérales (14) s'étendent sensiblement parallèlement au plan équatorial (Y-Y').

15. Pneu selon l'une quelconque des revendications 2 à 14, dans lequel ladite partie centrale (10i) annulaire comprend au moins trois rangées (17, 18, 19) circonférentielles de blocs (20), lesdites au moins trois rangées (17, 18, 19) circonférentielles de blocs (20) étant axialement séparées par deux rainures centrales (15, 16) circonférentielles.

16. Pneu selon la revendication 15, dans lequel les deux rainures centrales (15, 16) circonférentielles sont disposées sur les côtés opposés axialement par rapport au plan équatorial (Y-Y').

17. Pneu selon l'une quelconque des revendications 2 à 16, dans lequel dans chaque rangée (17, 18, 19) circonférentielle de blocs (20), deux blocs (20) consécutifs sont définis dans la direction circonférentielle par une lamelle (30, 31) inclinée vers le plan équatorial (Y-Y') et s'étendant en une ligne brisée.

18. Pneu selon l'une quelconque des revendications 15 à 17, dans lequel chaque bloc (20) a une lamelle (32) supplémentaire inclinée vers le plan équatorial qui s'étend sensiblement dans la direction circonférentielle et est déportée par rapport à l'axe longitudinal de symétrie dudit bloc.

19. Pneu selon l'une quelconque des revendications 2 à 18, dans lequel chacune des deux parties d'épaulement (10ii) annulaires comprend des lamelles d'épaulement (33) inclinées vers la ligne médiane de la rainure latérale axialement adjacente.

20. Pneu selon la revendication 19, dans lequel les lamelles d'épaulement (33) s'étendent en une ligne brisée et sont positionnées sensiblement en correspondance avec les lamelles (30, 31) transversales de la rangée de blocs (20) axialement adjacente.
